Europäisches Patentamt

European Patent Office

Office européen des brevets

(19)

(11) Veröffentlichungsnummer: **0 280 863 B1**

(12) **EUROPÄISCHE PATENTSCHRIFT**

(45) Veröffentlichungstag der Patentschrift: **16.10.91**

(51) Int. Cl.⁵: **G01L 25/00**

(21) Anmeldenummer: **88100867.6**

(22) Anmeldetag: **21.01.88**

(54) **Prüfvorrichtung für auf Drehmoment anziehende automatische Schraubstationen.**

(30) Priorität: **04.03.87 DE 3706895**

(43) Veröffentlichungstag der Anmeldung:
**07.09.88 Patentblatt 88/36**

(45) Bekanntmachung des Hinweises auf die
Patenterteilung:
**16.10.91 Patentblatt 91/42**

(84) Benannte Vertragsstaaten:
**DE ES FR GB IT SE**

(56) Entgegenhaltungen:
**DE-A- 1 703 681**
**DE-A- 3 532 353**

(73) Patentinhaber: **FORD-WERKE AKTIENGESELL-
SCHAFT**
**Werk Köln-Niehl Henry-Ford-Strasse Postfach 60 40 02**
**W-5000 Köln 60(DE)**
(84) Benannte Vertragsstaaten:
**DE IT SE**

Patentinhaber: **FORD FRANCE SOCIETE ANO-
NYME**
**344 Avenue Napoléon Bonaparte B.P. 307**
**F-92506 Rueil Malmaison Cedex(FR)**

(84) Benannte Vertragsstaaten:
**FR**

Patentinhaber: **FORD MOTOR COMPANY LI-
MITED**
**Eagle Way**
**Brentwood Essex CM13 3BW(GB)**
(84) Benannte Vertragsstaaten:
**GB**

Patentinhaber: **Ford Motor Company**
**One Parklane Boulevard Parklane Towers
East**
**Dearborn Michigan 48126(US)**
(84) Benannte Vertragsstaaten:
**ES**

(72) Erfinder: **Weber, Gottfried**
**Mittelstrasse 5**
**W-5000 Köln 1(DE)**

(74) Vertreter: **Messulam, Alec Moses et al**
**A. Messulam & Co. 24 Broadway**
**Leigh on Sea Essex SS9 1BN(GB)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf eine Prüfvorrichtung für auf Drehmoment anziehende automatische Schraubstationen, insbesondere in Großserien-Montageanlagen mit gegebener Taktzeit.

Aus der DE-PS 17 03 681 ist ein Schrauber zum automatischen Anziehen von Schrauben bekannt, wie er für automatische Schraubstationen, insbesondere in Großserien-Montageanlagen mit gegebener Taktzeit angewendet werden kann. Zur Prüfung der Schraubverbindung wird hierbei vorgeschlagen, den Schrauber unmittelbar mit einer Meßvorrichtung zu versehen, die im wesentlichen aus einem elastisch verdrehbaren Glied und einer die Verdrillung dieses elastischen Gliedes messenden Winkelmesser besteht.

Solche Schrauber zum automatischen Anziehen von Schrauben mit integrierten Meßeinrichtungen, die beim Erreichen des vorgegebenen Anzugsdrehmomentes für die Schraubverbindung den Schrauber abschalten, sind in einer Vielzahl von Ausführungsformen bekannt und in Anwendung. Obwohl diese Schrauber sich eigentlich bei jedem Schraubvorgang ständig selbst überwachen, ist es erforderlich, diese Schrauber fallweise in Abständen zu überprüfen, um festzustellen ob die verhältnismäßig aufwendigen Schraub- und Meßeinrichtungen störungsfrei funktionieren.

Dies wurde bisher in der Weise durchgeführt, daß entsprechende Drehmomentmeßgeräte aufgebaut wurden, deren Prüfköpfe der Schrauber in Drehung versetzte und mittels denen dann die im Schrauber integrierte Meßeinrichtung in ihrer Funktion überprüft werden konnten. Der erforderliche Aufbau von Drehmomentmeßeinrichtungen konnte nicht während der normalen Großserien-Montagezeit durchgeführt werden, da für den Aufbau der Meßeinrichtungen ein erheblicher Zeitaufwand erforderlich war.

Die Aufgabe der Erfindung ist es, eine Prüfvorrichtung für auf Drehmoment anziehende automatische Schraubstationen, insbesondere in Großserien-Montageanlagen mit gegebener Taktzeit zu schaffen, die anstelle einer zu montierenden Baueinheit die Montageanlage durchläuft, von der automatischen Schraubstation betätigt wird und danach von der Montageanlage abgenommen werden kann, um die von der automatischen Schraubstation tatsächlich aufgebrachten Anzugs-Drehmomente zu überprüfen.

Gemäß der Erfindung wird diese Aufgabe gelöst, indem die Prüfvorrichtung für auf Drehmoment anziehende automatische Schraubstationen, insbesondere in Großserien- und Montageanlagen mit gegebener Taktzeit auf die vorgesehene Bauteilaufnahme aufsetzbar ist und einen Prüfkopf aufweist, der die entsprechende Schraubverbindung in der Weise simuliert, daß er eine der Anzahl der Schrauben entsprechende Anzahl von an einem Ende festgelegten und an ihren anderen Enden drehbar gelagerten, entsprechende Schraubköpfe aufweisenden Torsionsstäben besitzt, an denen die Schrauboperation durchgeführt wird, wobei jedem verdrehbaren Ende eines Torsionsstabes ein den erreichten Drehwinkel festhaltender Kontrollring zugeordnet ist.

Dadurch, daß der Prüfkopf die entsprechende Schraubverbindung simuliert, kann er in der gegebenen Taktzeit die Montageanlage im Bereich der automatischen Schraubstation durchlaufen und nach Durchführung der Schrauboperation von der Montageanlage abgenommen werden. Anhand der über die Kontrollringe festgehaltenen Drehwinkel kann an anderer Stelle einfach und sicher überprüft werden, ob die Schraubstation nach wie vor die vorgegebenen Anzugs-Drehmomente einhält.

Die Erfindung wird anhand eines in den Figuren gezeigten Ausführungsbeispieles näher erläutert. Es zeigt:

Fig. 1    eine Seitenansicht auf eine erfindungsgemäße Prüfvorrichtung;

Fig. 2    einen Schnitt durch den eine Schraubverbindung simulierenden Prüfkopf und

Fig. 3    eine Ansicht des Prüfkopfes in Richtung des Pfeiles III in Fig. 1.

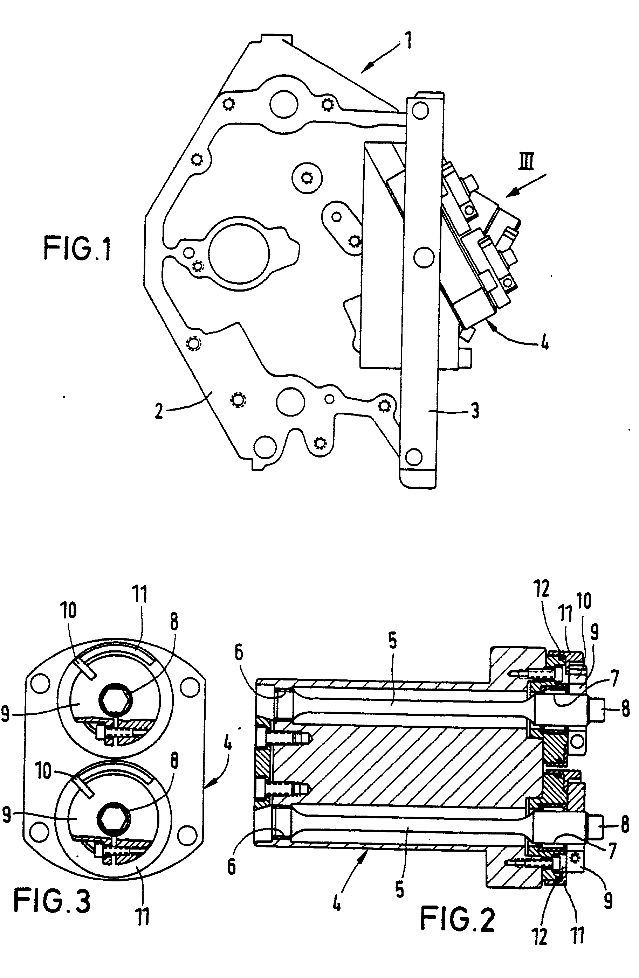

Mit der in Fig. 1 gezeigten Prüfvorrichtung 1 soll eine automatische Schraubstation, die die Pleuelmuttern in einem Verbrennungsmotor auf Drehmoment anzieht, überprüft werden. Die Prüfvorrichtung 1 ist daher an einem Zylinderblock 2 des Verbrennungsmotors befestigt, damit sie an den gleichen Bauteilaufnahmen der Montageanlage aufgenommen werden kann.

Anstelle der im Zylinderblock 2 montierten Kurbelwelle mit den montierten Pleuelstangen, den aufgesetzten Pleuellagerdeckel und den Pleuelmuttern ist eine Tragplatte 3 mit dem Zylinderblock 2 verbunden, an der ein Prüfkopf 4 in der genauen Lage und Ausrichtung angeordnet ist, daß die der Anzahl der Schraubverbindungen entsprechende Anzahl von Torsionsstäben 5, deren eine Enden 6 festgelegt und deren andere Enden 7 drehbar gelagert sind und entsprechende Schraubköpfe 8 aufweisen von der automatischen Schraubstation in gleicher Weise betätigt werden können wie die entsprechende Schraubverbindung an dem zu montierenden Bauteil.

Den verdrehbaren Enden 7 der Torsionsstäbe 5 sind Klemmringe 9 mit Anschlägen 10 zugeordnet, die konzentrisch hierzu angeordnete Kontrollringe 11 in der einen Drehrichtung mitnehmen und die im erreichten Drehwinkel durch einen einen Reibungsschluß bereitstellenden O-Ring 12 festgehalten werden.

Die erfindungsgemäße Prüfvorrichtung für auf Drehmoment anziehende automatische Schraubstationen wird auf die in der Großserien-Montageanlage mit gegebener Taktzeit für die zu montierenden Bauteile vorgesehenen Bauteilaufnahme aufgesetzt und durchlaufen die Montageanlage im Bereich der automatischen Schraubstation und die Schrauboperation wird am Prüfkopf in der gleichen Weise durchgeführt wie am zu montierenden Bauteil. Wenn die Prüfvorrichtung die Schraubstation verlassen hat, kann sie von der Montageanlage abgenommen werden und anhand der durch die Kontrollringe festgehaltenen Drehwinkel kann auf einfache Weise überprüft werden, ob das vorgegebene Anzugsdrehmoment von der automatischen Schraubstation eingehalten wurde.

Mit der erfindungsgemäßen Prüfvorrichtung ist ein fallweises Überprüfen von automatischen Schraubstationen innerhalb einer Großserien-Montageanlage möglich, ohne daß hierdurch unerwünschte Verlustzeiten in größerem Umfang auftreten.

## Patentansprüche

1. Prüfvorrichtung für auf Drehmoment anziehende automatische Schraubstationen, insbesondere in Großserien-Montageanlagen mit gegebener Taktzeit, **dadurch gekennzeichnet,** daß die Prüfvorrichtung (1) auf die vorgesehene Bauteilaufnahme aufsetzbar ist und einen die entsprechende Schraubverbindung simulierenden Prüfkopf (4) aufweist, der aus einer der Anzahl der Schrauben entsprechenden Anzahl von an einem Ende (6) festgelegten und an ihren anderen Enden (7) drehbar gelagerten, entsprechende Schraubköpfe (8) aufweisenden Torsionsstäben (5) besteht, an denen die Schrauboperation durchgeführt wird, wobei jedem verdrehbaren Ende (7) eines Torsionsstabes (5) ein den erreichten Drehwinkel festhaltender Kontrollring (11) zugeordnet ist.

## Claims

1. A testing apparatus for automatic screwing stations tightening at torque, in particular in mass-production assembly plants with a given clock time, characterized in that the testing apparatus (1) can be mounted on the component fixture provided and comprises a testing head (4) which simulates the corresponding screw connexion and which, in accordance with the number of screws, comprises a corresponding number of torsion rods (5) which are secured at one end (6) and are rotatably mounted at their other ends (7) and comprise corresponding screwing heads (8) and on which the screwing operation is carried out, each rotatable end (7) of a torsion rod (5) having associated with it a control ring (11) which records the angle of rotation attained.

## Revendications

1. Dispositif d'essai pour des postes automatiques de vissage à serrage en fonction du couple, en particulier dans des installations de montage en grande série à cadence imposée, caractérisé par le fait que le dispositif d'essai (1) peut être posé sur le réceptacle prévu pour la pièce, et qu'il comporte une tête d'essai (4) simulant la liaison par vissage correspondante et composée de barres de torsion (5) dont le nombre correspond au nombre des vis, qui sont fixées à une extrémité (6) et montées tournantes à leur autre extrémité (7), qui présentent des têtes de vis correspondantes (8) et sur lesquelles est pratiquée l'opération de vissage, cependant qu'à chaque extrémité tournante (7) d'une barre de torsion (5) est associée une bague de contrôle (11) enregistrant l'angle de rotation qui a été atteint.

FIG.1

FIG.3

FIG.2